# EUROPEAN PATENT SPECIFICATION

(11) **EP 4 319 602 B1**
(45) Date of publication and mention of the grant of the patent: **25.12.2024**
(21) Application number: 23733802.5
(22) Date of filing: 24.05.2023
(51) Int. Cl.: A47J 31/38, A47J 31/58

(54) **ESPRESSO COFFEE MACHINES LEVER UNIT BRAKING SYSTEM**
BREMSANLAGE FÜR ESPRESSO-KAFFEEMASCHINENHEBELEINHEIT
SYSTÈME DE FREINAGE D'UNITÉ DE LEVIER DE MACHINES À CAFÉ EXPRESSO

(30) Priority: 27.06.2022 IT 202200013471
(43) Date of publication of application: 14.02.2024
(73) Proprietor: B.F.C. S.r.l., 31015 Conegliano (IT)
(72) Inventor: FADELLI, Eros, 31015 Conegliano (TV) (IT)
(86) International application number: PCT/IT2023/050130
(87) International publication number: WO 2024/003953

(56) References cited:
- EP-A1- 3 220 786
- EP-A1- 3 549 494
- EP-A1- 3 738 482
- EP-B1- 3 220 786

## Description

This invention relates to an espresso coffee machines lever unit braking system, this braking system essentially consisting of double levers associated with a pair of damping pistons. This system is associated with the external surface of a lever unit.

The subject matter of this patent application is valid in the field of production of espresso coffee machines, in particular relating to the production of coffee machines equipped with a lever dispensing unit.

In general, espresso coffee machines have a machine body containing the boiler for the production of hot water and means for conveying the hot water to the dispensing unit.

According to known art, the dispensing unit comprises a housing for positioning, by the operator, of the filter holder which contains the coffee powder.

Conventionally, the dispensing unit may be constituted by a brass element which conveys the hot water under pressure by means of a pump motor or, alternatively, it may be constituted by a lever unit in which the hot water is pressurised by cooperation of a lever with a system of spring type elastic elements.

Typically the lever-type dispensing unit consists of a manual control unit with a lever, manually operated by the operator. This lever is designed to activate a system whereby hot water passes through the filter holder and therefore to dispense the beverage. Conventionally, the phases that characterise the operation of the lever unit consist of filling of a generic filter holder with coffee powder, positioning of the filter holder in the appropriate housing of the lever unit, manual movement by the lever operator from an initial/raised lever position to an end/lowered lever position and subsequent release of the lever once the beverage dispensing procedure has taken place.

In particular, the position of the lever in which the coffee pre-infusion phase takes place is known to be identified as the "pre-work position".

Therefore, in the fully lowered lever position, as a result of the network pressure, the infusion chamber, i.e. the space occupied by the ground coffee, is filled with hot water.

The time of this phase is of the order of a few seconds and is at the discretion of the operator .

During the release phase, the lever acts on a pair of elastic elements of the coaxial spring type which in turn act on a compression ring generating the pressure inside the infusion chamber, necessary for dispensing of the coffee .

In particular, during the beverage dispensing phase due to the expansion effect of the elastic elements, the return movement of the lever to the initial position is determined.

According to the above, the dispensing of espresso coffee through coffee machines of the type described requires a continuous downward and upward movement of the lever performed by the operator.

In addition,if the operator forgets to place the coffee in the filter holder and lowers the lever and then releases it, the lever clicks violently upwards due to the lack of resistance that the coffee powder opposes to the compression ring.

Furthermore, repeated operations by the operator of moving the lever from the initial position to the operating position of the pressure unit - elastic elements and compression ring - and repositioning of the lever in the original position may constitute in the long term a problem for the operator themselves.

### State of the art

Solutions to the drawbacks caused by the possible violent return of the lever to the original position are known in the state of the art. In particular, solutions that prevent the harmful effects of a sudden trigger of the lever towards the starting position are known.

For example, EP3319492 describes a solution that determines the association of the lever to the elastic elements that activate the compression ring, this association taking place exclusively when the lever is being gripped by the operator.

Although it is valuable as a solution for the safety of the operator, the system described in the afore-mentioned document has the disadvantage that the operator is forced to keep the lever gripped for the entire duration of the return phase. If, in fact, the operator were to release the lever, the safety system described in the afore-mentioned document would come into operation in order to prevent a sudden and potentially dangerous return. Therefore, the solution described in the afore-mentioned document requires the need for constant gripping of the lever by the operator.

Solutions conventionally known with the expression "lever unit braking system" typically applied inside the lever unit itself are also known from the state of the art.

For example, EP3220786 describes the creation of a braking system consisting of at least two damper devices that are associated with the elastic elements of the spring type. While appreciably generating a braking action, the system described in the afore-mentioned document allows a slowing action to the return movement of the lever without however modifying the effort by the operator in the downward movement of the lever itself.

EP3549494 describes a braking system for the lever unit, said braking system consisting of a gearmotor associated with the axis of rotation of the lever and of a free wheel, associated with the same axis of rotation.

According to what is reported in the afore-mentioned document, the braking action is generated during the return movement of the lever by coupling the shaft to the gearmotor, by means of the free wheel. EP3738482 describes a braking system for the lever unit, said braking system consisting of a viscous rotary type relay device.

Solutions known from the state of the art are particularly complex during maintenance as they require disassembly of the lever unit or of parts of the machine body in case of a fault or of periodic maintenance.

A further disadvantage of the solutions known from the state of the art is that of requiring the operator to grip the lever also in the return phase thereof into the initial position as no means are present to regulate the return speed of the lever to the initial position.

The aim of the invention covered by this patent application is therefore to provide an espresso coffee machines lever unit braking system which resolves the disadvantages of the state of the art, in particular an espresso coffee machines lever unit braking system which allows the operator to act safely even if they forget to load the filter holder with coffee powder.

A further purpose of the invention, subject of this patent application, is to create an espresso coffee machines lever unit braking system that can be used to obtain a beverage that meets the quality standards while maintaining the appropriate pressure conditions inside the infusion chamber.

A further purpose of the invention, subject of this patent application, is to create an espresso coffee machines lever unit braking system that does not require the operator to grip the lever in the return phase of the same back to the initial position.

A further purpose of the invention, subject of this patent application, is to create an espresso coffee machines lever unit braking system that is equipped with means for adjusting the return speed of the lever itself.

A further purpose of the invention, subject of this patent application, is to create an espresso coffee machines lever unit braking system that allows regular operation even in case of breakage of one of the elements of the braking system itself without interruption and that is particularly functional in the maintenance phases.

A further purpose of the invention, subject of this patent application is to create an espresso coffee machines lever unit braking system that is safe even in the event that the lever is inadvertently left lowered, in the absence of filter holder, allowing the same, if accidentally struck, to return in a slow and safe way to the initial position.

A further purpose of the invention, subject of this patent application, is to create an espresso coffee machines lever unit braking system that is adaptable to most of the already existing lever units of the known type and without alternative braking systems.

This and other aims will be achieved by the espresso coffee machines lever unit being equipped with a braking system created according to what is detailed below and which is characterised according to the main claim and to the secondary claims.

### Invention summary

The subject of this patent application is an espresso coffee machines lever unit braking system, this braking system essentially consisting of a double lever system each associated with a pair of damper pistons.

### Brief description OF the Figures

In a preferred form, it is shown for indicative and non-limiting example in the annexed Figures wherein:
Fig. 1 shows an overall schematic view of the lever dispensing unit according to the invention with the lever in the initial position.
Fig. 2 shows an exploded view of the lever unit braking system according to this invention.
Fig.3 shows an overall view of the dual lever system and damper pistons according to this invention.
Fig. 4 shows an overall view of the levers and of the relative pivots.

### Detailed description

With reference to the annexed Figures, the braking system (200), subject of this patent application, is applied to a dispensing unit (100)of the known type comprising a lever (101) movable from an initial position/lever (101)raised to an end position/lever(101) lowered.

According to known technique, the lever (101) has a free end (104) provided with a handle and an opposite end constrained to the cylindrical body (102) by means of a fork (103) so that the center of rotation (F) of the lever (101) lies on the body of the association surface between the constrained end of the lever (101) and the fork (103) .

Therefore, the movement of the lever (101) from the raised position to the lowered position takes place by activation of the operator on the handle and application of a rotational force around the center of rotation F.

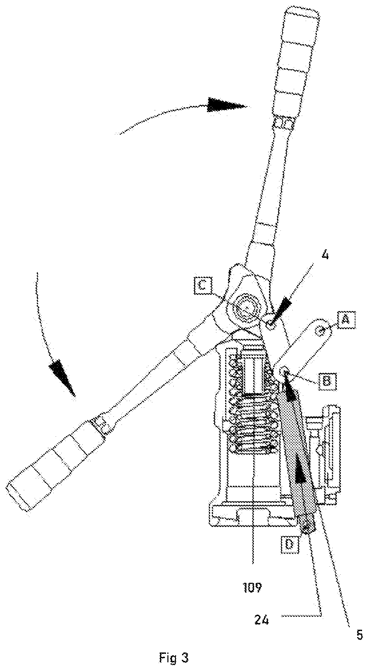

According to known technique, the drive unit (100) is provided with a cylindrical body (102), to which the fork (103) is associated and inside which elastic elements (109, Fig 3) of the spring type are housed.

According to known technique, by lowering the lever (101) the elastic elements (109) of the spring type are compressed inside the cylindrical body and by lifting the lever (101) they are decompressed.

According to known technique, the compression movement of the elastic elements (109) allows the flow of the hot water inside the cylindrical body (102) which, in the upward phase of the lever (101), is pushed inside the filter holder, not visible in the tables and associated to the lower end of the cylindrical body (102). According to the invention covered by this patent application, a braking system (200) is applied externally to the body of the drive unit (100).

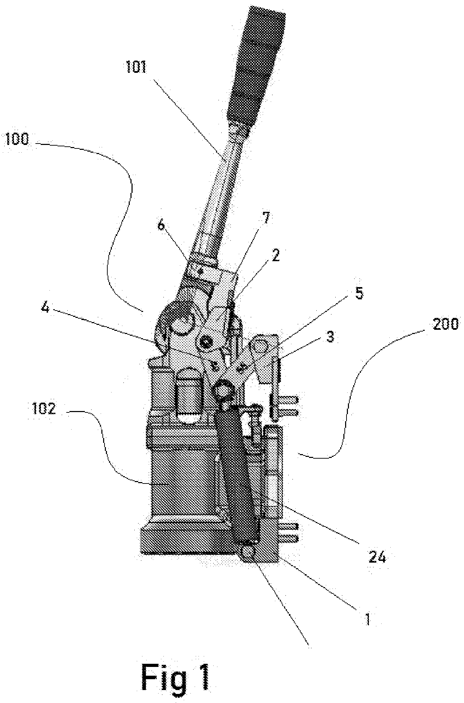

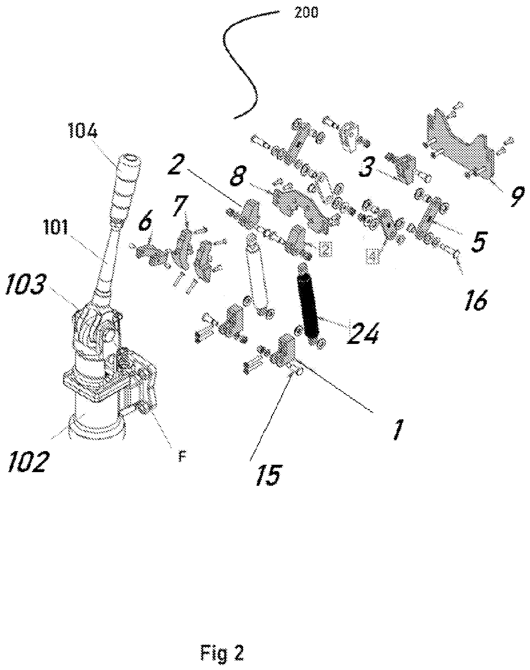

With reference to Fig 1, Fig 2 and Fig 3, the braking system (200) essentially consists of a pair of damper pistons (24) each pivoted at the bottom to a lower locking device (1) by means of pin-type devices (15) and each pivoted at the ends of a pair of longitudinally developing elements (4,5).

According to the invention which is the subject of this patent application, one end of a first longitudinally extending element (4) is associated with the upper end of the rod of the corresponding damper piston (24) and the opposite end is associated with a first locking device side (2) in turn associated with the body of the lever (101) .

In particular, each first lateral locking device (2) is associated with the lower end of a vertically developing body (7) which is in turn associated in the upper part with a body (6) internally presenting a recess adapted to house the lever body (101).

In particular, the association of the upper end of the damper piston (24) to one end of the first longitudinal development element (4) takes place by means of pin-type association device (16). As previously described, the upper end of the damper piston (24) is also associated with a second longitudinal development element (5), this second longitudinal development element (5) having a greater length than the first longitudinal development element (4). According to the invention covered by this patent application, the second longitudinal development element (5) is at one end associated with the upper end of the damper piston (24) by means of the pin-type association device (16) and at the opposite end with a second lateral block (3).

According to the invention, subject of this patent application, the braked system (200) therefore consists of at least two damper pistons (24) associated below with the corresponding lower locking devices (1) and above with a first pair of longitudinally extending elements (4). Each of these is associated with a lateral locking device (2), this lateral locking device (2) being in turn associated with the lateral ends of a body (6) by means of longitudinally extending elements (7). This body (6) is adapted to house a portion of the surface of the lever (101), said lateral locking devices (2) being associated with a first plate (8) hereinafter referred to as the first lock holder plate (8).

According to the above, the upper end of each damper piston (24) is associated in the upper part with a second longitudinal development element (5), associated with a second lateral locking device (3), in turn associated with a second plate (9), hereinafter referred to as a second lock holder plate (9).

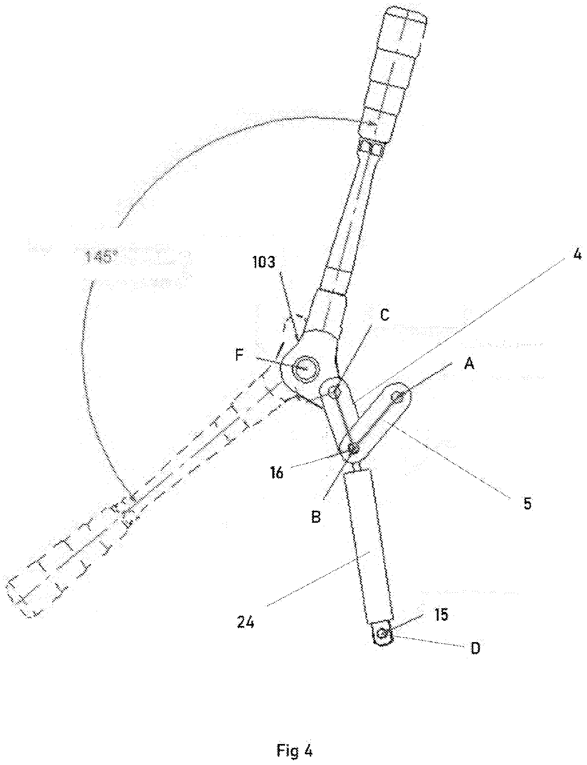

With reference to Fig 3 and Fig 4, the system created according to what is described consists of a pair of levers associated with the body of the lever unit comprising two first longitudinal development elements (4), hereinafter referred to as "short levers 4", two second longitudinal development elements (5), hereinafter referred to as "long levers 5", called short levers (4) and long levers (5) being connected to the corresponding pivots (A,B,C,D).

In particular:
- A first fixed pivot A on which one end of the long lever (5) is hinged,
- A second pivot B, called pivot B, movable by virtue of the elongation or shortening of the rod of the damper piston (24) to which the short lever (4) and the long lever (5) are hinged,
- A third pivot C, on which the end of the short lever (4) is hinged, this third pivot C being also movable by virtue of the rotation movement of the fork (103),
- A fourth fixed pivot D on which the lower end of the damper piston (24) is hinged.

According to the invention, subject of this patent application, the braked system (200), subject of this patent application and created according to what was previously described is activated in the ascent phase of the lever (101).

In particular, once the pre-work position has been left, understood as the coffee pre-infusion phase, the lever starts the upward movement as a result of the decompression of the elastic elements (109). At this stage, the fork (103) begins to rotate on the center of rotation F, moving down the short levers (4) and the long levers (5) with consequent compression of the rod of the damper piston (24). Consequently, the damping effect of the damper piston allows a slow upward movement towards the initial position.

In particular, Fig 3 shows the forces in play during the raising phase of the lever (103).

### Description of a preferential implementation method:

In a preferential implementation method, the braked system (200) comprises a pair of levers (4,5) associated laterally with the body of the dispensing unit (100) with lever (101), this pair of levers (4,5) comprising two first longitudinal development elements (4) constituting a pair of short levers (4) and two second longitudinal development elements (5) constituting a pair of long levers. These pairs of short levers (4) and long levers (5) are connected respectively to four pivots (A,B,C,D) wherein
- the first two ends of the long levers (5) are hinged to the first two fixed pivots (A),
- the second ends of the long levers (5) and the short levers (4) are hinged to the second two mobile pivots (B),
- the first ends of the short levers (4) are hinged to the mobile third pivots (C),
- the lower ends of the damper pistons (24) are hinged to the fourth fixed pivots (D).

Regardless of the preferential implementation method, the damping effect generated by the set of double damper pistons and double levers can be modified as required by varying the length of the levers.

The invention created according to what is described therefore allows the coffee dispensing operation without the need to keep the lever gripped in the return phase to the end-of-work position. Furthermore, as the components of the braking system are positioned externally to the cylindrical body, any ordinary or extraordinary maintenance is particularly facilitated with respect to the known solutions.

Finally, in the event of breakage of one of the two pistons of the braking system, subject of the patent application, the presence of the second piston and relative levers associated with it allows operation in safety.

## Claims

1. Braking system for dispensing unit for espresso coffee machines, said dispensing unit (100) being equipped with a lever (101) which moves around a centre of rotation (F) from a start position/raised lever (101) to an end position/lowered lever (101), said lever (101) having a first free end (104) equipped with a handle and a second end fastened to a cylindrical body (102) by means of a fork (103), said cylindrical body (102) containing within it elastic means (109) of the spring type, said braking system (200) being made up of a pair of levers (4,5) each consisting of a pair of longitudinal elements (4,5) said pair of levers (4,5) being associated with at least one damper piston (24)and associated with the outer surface of the cylindrical body (102) of the dispensing unit (100), said braking system (200) **characterised in that** each pair of levers (4,5) consists of a first longitudinal element (4) and a second longitudinal element (5), said first longitudinal element (4) being shorter than the second longitudinal element (5) so as to constitute a short lever (4) and a long lever (5), said short lever (4) and
long lever (5) being connected respectively to four fulcrums (A,B,C,D) wherein
the first fulcrum (A) is fixed and hinged to a end of the long lever (5),
the second fulcrum (B) is movable and hinged to the end of the long lever (5) which is opposite the end to which the first fulcrum (A) is hinged said second fulcrum (B) being hinged to an end of the short lever (4), the third fulcrum (C) is movable and hinged to the end of the short lever (4) which is opposite the end to which the second fulcrum (B) is hinged,
the fourth fulcrum (D) is fixed and hinged to the lower end of the at least one damper piston (24).

2. Braking system as per claim 1 **characterised in that** the at least one damper piston (24) is pivoted at the bottom to the end of a first locking device (1) .

3. Braking system as per the previous claims **characterised in that** the at least one damper piston (24) is pivoted at the top to a lateral end of the first longitudinal element (4) and to a lateral end of the second longitudinal element (5).

4. Braking system as per claim 1 **characterised in that** the lateral end of the first longitudinal element (4), opposite the lateral end associated with the at least one damper piston (24), is associated with a first lateral locking device (2), said first lateral locking device (2) being, in turn, associated with the lever body (101).

5. Braking system as per claim 4 **characterised in that** the first lateral locking device (2) is associated with the lower end of a vertical body (7) which is, in turn, associated at the top with a body (6) having a recess inside suitable for housing the lever body (101) .

6. Braking system as per claim 1 **characterised in that** the lateral end of the second longitudinal element (5), opposite the lateral end associated with the at least one damper piston (24), is associated on the opposite side with a second lateral locking device (3).

7. System as per claim 4 **characterised in that** the first lateral locking device (2) is associated with a plate (8) and the second lateral locking device (3) is associated with a second plate (9).

## Patentansprüche

1. Bremssystem für eine Brühgruppe für Espressomaschinen da a diese Brühgruppe (100) mit einem Hebel (101) ausgestattet ist, der um einen Drehpunkt (F) von einer Anfangsposition/Hebel (101) angehoben in eine Endposition/Hebel (101) abgesenkt bewegt werden kann, da dieser Hebel (101) ein erstes freies Ende (104), das mit einem Griff versehen ist, und ein zweites Ende aufweist, das mittels einer Gabel (103) an einem zylindrischen Körper (102) befestigt ist, da dieser zylindrische Körper (102) in seinem Inneren elastische Elemente (109), d. h. Federn, enthält, da dieses Bremssystem (200) aus einem Paar von Hebeln (4,5) besteht, die jeweils aus einem Paar von Längselementen (4,5) bestehen und da jedes Paar mit mindestens einem Dämpferkolben (24) und mit der Außenfläche des zylindrischen Körpers (102) der Brühgruppe (100) verbunden ist, zeichnet sich dieses Bremssystem (200) dadurch aus, dass
- jedes Paar von Hebeln (4,5) ein erstes Element in Längsrichtung (4) und ein zweites Element in Längsrichtung (5) umfasst, wobei das erste Längselement (4) eine Länge aufweist, die kürzer ist als die Länge des zweiten Längselements (5), und somit einen kurzen Hebel (4) und einen langen Hebel (5)
bildet, und aufgrund der Tatsache, dass
jeder kurze Hebel (4) und jeder lange Hebel (5) jeweils mit vier Drehpunkten (A, B, C, D) verbunden ist, wobei
- am fixen Drehpunkt (A) das erste Ende des langen Hebels (5),
- am zweiten, beweglichen Drehpunkt (B) das zweite Ende des langen Hebels (5) und des kurzen Hebels (4),
- am dritten beweglichen Drehpunkt (C) das erste Ende des kurzen Hebels (4) und
- am vierten fixen Drehpunkt (D) das untere Ende des Dämpferkolbens (24) angelenkt ist.

2. Bremssystem, das laut Forderung 1 **dadurch gekennzeichnet ist, dass** der Kolben (24) unten an das Ende einer ersten Verriegelungsvorrichtung (1) verzapft ist.

3. Bremssystem, das sich laut vorhergehenden Forderungen durch die Tatsache auszeichnet, dass der Kolben (24) oben an ein seitliches Ende des ersten Längselements (4) und an ein seitliches Ende des zweiten Längselements (5) verzapft ist.

4. Bremssystem, das sich laut Forderung 1 durch die Tatsache auszeichnet, dass das seitliche Ende des ersten Längselements (4), gegenüber dem seitlichen Ende, das mit dem Kolben (24) verbunden ist, mit der ersten seitlichen Verriegelungsvorrichtung (2) verbunden ist, wobei die erste seitliche Verriegelungsvorrichtung (2) ihrerseits an den Hebelkörper (101) angeschlossen ist.

5. Bremssystem, das sich laut Forderung 4 durch die Tatsache auszeichnet, dass die erste seitliche Verriegelungsvorrichtung (2) mit dem unteren Ende eines vertikal verlaufenden Körpers (7) verbunden ist, der seinerseits oben mit einem Körper (6) verbunden ist, der innen eine Aussparung zur Aufnahme des Hebelkörpers (101) aufweist.

6. Bremssystem, das sich laut Forderung 1 durch die Tatsache auszeichnet, dass das seitliche Ende des zweiten Längselements (5), das dem mit dem Kolben (24) verbundenen seitlichen Ende gegenüberliegt, mit dem gegenüberliegenden Ende einer zweiten seitlichen Verriegelungsvorrichtung (3) verbunden ist.

7. System, das sich laut Forderung 4 durch die Tatsache auszeichnet, dass die erste seitliche Verriegelungsvorrichtung (2) mit einer Platte (8) verbunden ist und dass die zweite seitliche Verriegelungsvorrichtung (3) mit einer zweiten Platte (9) verbunden ist.

## Revendications

1. Système de freinage d'un groupe de distribution pour machines à café expresso, ledit groupe de distribution (100) étant doté d'un levier (101) mobile autour d'un centre de rotation (F) depuis une position initiale/levier (101) soulevé jusqu'à une position finale/levier (101) abaissé, ledit levier (101) présentant une première extrémité libre (104) dotée d'une poignée et d'une seconde extrémité liée à un corps cylindrique (102) au moyen d'une fourche (103), ce corps cylindrique (102) contenant à l'intérieur des moyens élastiques (109) de type ressort, ce système de freinage (200) étant constitué d'une paire de leviers (4,5) chacun constitué d'un couple d'éléments longitudinaux (4,5) chaque paire étant associée à au moins un piston amortisseur (24) et associée à la surface extérieure du corps cylindrique (102) du groupe de distribution (100), ce système de freinage (200) **caractérisé par le fait que**
- chaque paire de leviers (4,5) est constituée d'un premier élément longitudinal (4) et d'un second élément développé longitudinalement (5), le premier élément développé longitudinalement (4) ayant une longueur inférieure à celle du second élément longitudinal (5) pour constituer un levier court (4) et un levier long (5)
et **par le fait que**
chaque levier court (4) et chaque levier long (5) est relié respectivement à quatre points d'appui (A, B, C, D) dans lesquels
- au point d'appui (A), fixe, est articulée la première extrémité du levier long (5),
- au second point d'appui (B), mobile, est articulée la deuxième extrémité du levier long (5) et le levier court (4),
- au troisième point d'appui (C), mobile est articulée la première extrémité du levier court (4),
- au quatrième point d'appui (D), fixe, est articulée l'extrémité inférieure du piston amortisseur (24).

2. Système de freinage selon la réclamation 1 **caractérisé par le fait que** le piston (24) est pivoté inférieurement à l'extrémité d'un premier dispositif de verrouillage (1).

3. Système de freinage selon les réclamations ci-dessus **caractérisé par le fait que** le piston (24) est pivoté supérieurement à une extrémité latérale du premier élément développé longitudinalement (4) et à une extrémité latérale du second élément développé longitudinalement (5).

4. Système de freinage selon la réclamation 1 **caractérisé par le fait que** l'extrémité latérale du premier élément développé longitudinalement (4), opposée à l'extrémité latérale associée au piston (24), est associée à un premier dispositif de verrouillage latéral (2), ce premier dispositif de verrouillage latéral (2) étant à son tour associé au corps du levier (101).

5. Système de freinage selon la réclamation 4 **caractérisé par le fait que** le premier dispositif de verrouillage latéral (2) est associé à l'extrémité inférieure d'un corps développé verticalement (7) qui est à son tour associé supérieurement à un corps (6) présentant intérieurement une cavité pour loger le corps du levier (101) .

6. Système de freinage selon la réclamation 1 **caractérisé par le fait que** l'extrémité latérale du deuxième élément développé longitudinalement (5), opposée à l'extrémité latérale associée au piston (24), est associée à l'extrémité opposée d'un deuxième dispositif de verrouillage latéral (3).

7. Système selon la réclamation 4 **caractérisé par le fait que** le premier dispositif de verrouillage latéral (2) est associé à une plaque de roulement (8) et que le second dispositif de verrouillage latéral (3) est associé à une seconde plaque (9).
